Europäisches Patentamt

European Patent Office

Office européen des brevets

(11) Publication number: **0 155 153**
**B1**

(12) **EUROPEAN PATENT SPECIFICATION**

(45) Date of publication of patent specification: **05.12.90**

(51) Int. Cl.⁵: **G 11 B 15/44,** G 11 B 27/22, G 11 B 27/26

(21) Application number: **85301616.0**

(22) Date of filing: **08.03.85**

(54) **Tape reproducing apparatus of automatic reversing type.**

(30) Priority: **15.03.84 JP 48195/84**

(43) Date of publication of application:
**18.09.85 Bulletin 85/38**

(45) Publication of the grant of the patent:
**05.12.90 Bulletin 90/49**

(84) Designated Contracting States:
**DE FR GB NL**

(56) References cited:
**US-A-3 893 177**

**PATENT ABSTRACTS OF JAPAN, vol. 7, no. 184 (P-216)1329r, 13th August 1983; & JP - A - 58 085 950 (TOKYO SHIBAURA DENKI K.K.) 23-05-1983**

**PATENT ABSTRACTS OF JAPAN, vol. 8, no. 141 (P-283)1578r, 30th June 1984; & JP - A - 59 040 382 (NIPPON COLUMBIA K.K.) 06-03-1984**

**PATENT ABSTRACTS OF JAPAN, vol. 4, no. 168 (P-37)650r, 20th November 1980; & JP - A - 55 113 179 (SONY K.K.) 01-09-1980**

(73) Proprietor: **SONY CORPORATION**
**7-35 Kitashinagawa 6-Chome Shinagawa-ku Tokyo 141 (JP)**

(72) Inventor: **Murayama, Kazuo c/o Patent Division Sony Corporation 7-35 Kitashinagawa-6 Shinagawa-ku Tokyo (JP)**

(74) Representative: **Thomas, Christopher Hugo et al D Young & Co 10 Staple Inn London WC1V 7RD (GB)**

Courier Press, Leamington Spa, England.

## Description

The invention relates to tape reproducing apparatus and to tape recording and reproducing apparatus, both of automatic reversing type, which will automatically change the direction in which a magnetic tape is running.

Many methods have been developed for detecting the end of a magnetic tape when the tape in a cassette is fully wound onto the take-up reel. In one of these methods, an optical device is arranged close to the tape path for detecting the difference in the optical characteristics of the tape between the portion where magnetic particles are coated and the leader portions which are attached to both ends of the coated portion. For detecting the actual tape end, it is necessary to distinguish whether the detected leader portion is attached to the beginning of the coated portion or to the end. Usually, an electronic device is coupled to the optical device for that purpose. The electronic device includes, for example, an integrating circuit having a certain time constant which provides sufficient time for the leader portion attached to the beginning of the coated portion to pass through the optical device, for preventing misoperation.

The above method can be used in an apparatus of automatic reversing type which will automatically change the direction of the tape at the tape end. For such an apparatus it is preferred that the change of direction shall occur as soon as possible at the end of the coated portion. Various electronic circuits, for example, a combination of a differentiating or integrating circuit and a logic circuit, have been proposed for this purpose, but these circuits, which are only needed to detect the end of the coated portion, are complicated and expensive, so increasing the price of the apparatus.

As examples of such previously proposed apparatus, reference may firstly be made to US patent specification US-A-3 893 177 which discloses an automatic program(me) finder system operating in dependence on the reproduced output to locate the beginning or end of a program(me) in the fast forward and rewind modes. The system also has an end-of-tape sensor operating by sensing whether or not the tape supply reel is rotating. Secondly, reference may be made to Japanese patent specification JP-A-58/085950 which discloses an optically controlled automatic reversing circuit.

According to the present invention there is provided a tape reproducing, or recording and reproducing, apparatus of automatic reversing type comprising:

an optical sensor for deriving respective different output signals from the magnetic coated portion of a tape and the leader of the tape;

a first detecting circuit connected to said sensor and generating a first output signal which changes from one state to another state only when the end of the coated portion of the tape is detected by the sensor in the forward mode of the apparatus;

a second detecting circuit including a rectifying circuit receiving a playback signal and detecting a non-recorded area of the tape, said second detecting circuit generating a second output signal which changes from one state to another state only when a non-recorded area of the tape is detected in the fast-forward or the fast-rewind mode of the apparatus;

an integration circuit which includes a capacitor and a resistor and has a predetermined time constant;

a switching circuit responsive to the modes of the apparatus and selectively supplying one of said first and second output signals to said integration circuit such that the capacitor of said integration circuit is discharged and charged with the same time constant; and means for controlling the mode of the apparatus in dependence upon the voltage across said integration circuit.

In embodiments of the invention said time constant can be made small, because the output signal of the second detecting circuit is generated only when the end (not the beginning) of the coated portion of the tape is detected, so the change of direction can be effected quickly at the end of the coated portion.

The invention will now be described by way of example with reference to the accompanying drawings, throughout which like parts are referred to by like references, and in which:

Figure 1 is a circuit diagram of a previously proposed tape end detecting circuit;

Figure 2 shows waveforms of signals generated at two points in the circuit of Figure 1;

Figure 3 is a part-block, part-circuit diagram of a tape recording and reproducing apparatus of automatic reversing type forming an embodiment of the invention;

Figure 4 shows waveforms of signals generated at several correspondingly indicated points in the circuit of Figure 3.

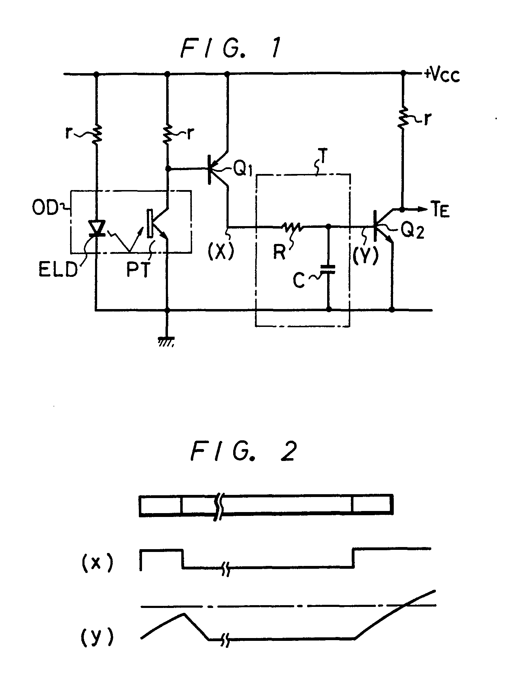

As well known, a magnetic tape contained in a cassette has a magnetically coated portion carrying the magnetic recording material and two leader portions each say 10cm long, which are transparent and attached to respective ends of the coated portion. One of the methods which has been developed for detecting the end of the tape uses an optical device which is arranged close to the tape path and can detect the difference in the optical characteristics of the coated portion and the leader portions. Figure 1 shows an example of such a detecting circuit.

Referring to Figure 1, an optical device OD comprises, for example, an electro-luminescent diode ELD and a photo-transistor PT which are arranged close to respective sides of the tape path. The detecting circuit comprises the optical device OD and switching transistors Q1 and Q2, and an integrating circuit T.

As shown in Figures 1 and 2, a DC voltage (Vcc) is supplied to the integrating circuit T when either of the leader portions is detected by the optical device OD. To detect the end of the tape, a time constant which is determined by a resistor R and a capacitor C of the integrating circuit T is made large enough to make the switching transistor Q2 turn on only when the tape is fully wound.

On the other hand, it is desired for tape recording and reproducing apparatus of automatic reversing type that the change in direction should occur as quickly as possible at the end of the coated portion. Therefore, various electronic circuits, for example, a combination of a differentiating or an integrating circuit and a logic circuit, have been developed to detect the end of the coated portion of the tape. Moreover, in some recently developed tape recording and reproducing apparatus, there is a mode of operation in which a non-recorded portion of the tape, located between recorded portions, is detected in the fast-forward or fast-rewind mode of the apparatus, for quickly searching for the beginning of a particular song or piece of music to which the user wishes to listen. In this mode of the apparatus, sometimes called the AMS (Automatic Music Sensor) mode, the magnetic head reproduces the recorded signals from the tape which is running at high-speed, and a rectifying circuit to which the reproduced signals is supplied, and logic circuits are combined to detect a non-recorded portion of the tape.

In an embodiment of the invention the detecting circuit for detecting the end of the coated portion of the tape is combined with another circuit for detecting a non-recorded portion of the tape. As will be seen, the detecting operation at the tape end is performed in the forward mode of the apparatus, and the detecting operation of the non-recorded portions is performed in the fast-forward or fast-rewind mode of the apparatus, so the common parts of the apparatus do not cause problems.

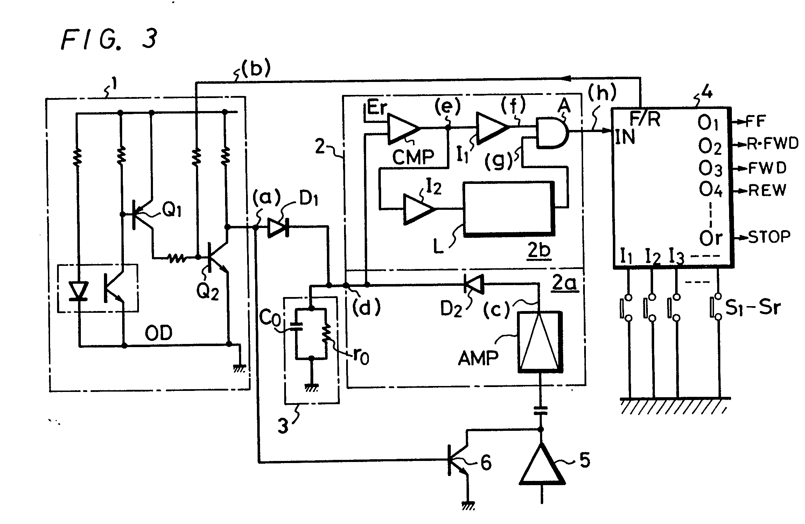

Referring now to Figure 3, one embodiment of the invention comprises a detecting circuit 1 for detecting the end of the coated portion of the tape, an integrating circuit 2 for detecting non-recorded portions of the tape and comprising a rectifying circuit 2a and a logic circuit 2b, an integrating circuit 3 having a certain time constant determined by a resistor $r_0$ and a capacitor $C_0$, a control circuit 4 for generating respective control signals corresponding to several modes of the apparatus, and a playback amplifier 5 the output of which can be controlled by a muting transistor 6.

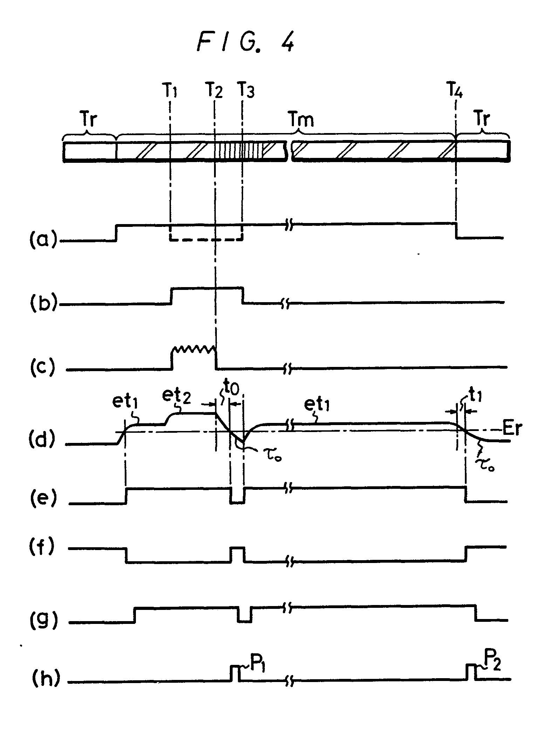

The detecting circuit 1 comprises the optical device OD which operates as the previously proposed device shown in Figure 1, and a pair of switching transistors Q1 and Q2. As shown in Figure 4(a), the output signal of the detecting circuit 1 is "L" level when the leader portions are detected and both of the transistors Q1 and Q2 turn on, and is "H" level when the coated portion of the tape is detected.

The output terminal F/R of the control circuit 4 is connected to the base terminal of the transistor Q2, so that when the mode of apparatus is fast-forward or fast-rewind, the transistor Q2 is turned on by the signal coming from this loop, to keep the output at "L" level.

The logic circuit 2b comprises a comparator CMP, invertors $I_1$ and $I_2$, a delay circuit L and an AND circuit A. One input terminal of the comparator CMP is connected to the outputs of the detecting circuit 1 and of the rectifying circuit 2a, and is also connected to the integrating circuit 3.

The integrating circuit 3 will generate a signal having a certain voltage corresponding to the current coming from either of the detecting circuit 1 or the rectifying circuit 2a.

The control circuit 4 has input terminals Il to Ir and output terminals Ol to Or. When one of operation switches S1 to Sr is depressed, at one of the output terminals Ol to Or will be developed a control signal corresponding to the selected mode of the apparatus, for controlling the tape-drive mechanism. When the switching signal is supplied to the input terminal IN of the control circuit 4, the control circuit 4 operates automatically to change the mode of the apparatus from the fast-forward mode if the AMS mode has been previously set by the one of the switches, and on the other hand, operates automatically to change the running direction ofthe tape if the forward or reverse-forward mode has previously been set by another of the switches.

The operation of the circuit of Figure 3 will be understood by reference also to Figure 4. When the mode of the apparatus is changed by operation of one of the switches S1 to Sr from the forward mode to the fast-forward or fast-rewind mode for setting the AMS mode at the time T1 shown in Figure 4, the control circuit 4 develops an inhibiting signal, shown in Figure 4(b), at the terminal F/R, so that the output of the detecting circuit 1 is changed to "L" level as shown by dotted lines in Figure 4(a). On the other hand, the output of the playback amplifier 5 is supplied to the rectifying circuit 2a from the time T1. Therefore the rectified signal shown in Figure 4(c) will be supplied through the diode D2 to the integrating circuit 3. As shown in Figure 4(d), the integrating circuit 3, being already charged to a certain voltage level et1 corresponding to the current from the detecting circuit 1 during the playback mode, will be charged to another voltage level et2 corresponding to the current from the diode D1.

The rectified signal disappears from the time T2 shown in Figure 4(c) when the non-recorded portion is reached, so that the output voltage et2 of the integrating circuit 3 is discharged along the curve τo, being determined by the time constant (ro x Co). If the non-recorded portion is detected continuously for a certain time to, for example 40 to 100 ms in the fast-forward or fast-rewind mode, which corresponds to at least 1 sec in the forward mode, and is used to distinguish a pianissimo part from a non-recorded portion, the comparator CMP begins to operate from the point where the discharge curve τo crosses the reference voltage Er.

Invertors $I_1$ and $I_2$, a delay circuit L, and an AND circuit A operate in known manner to detect only the change from "H" level to "L" level, and an output pulse P1 of the AND circuit A is supplied to the terminal IN as shown in Figures 4(f), 4(g) and 4(h), so that the mode of the apparatus is changed to the forward or reverse-forward mode.

As a result of this change, the inhibiting signal disappears at the time T3 as shown in Figure 4(b), so that the output of the detecting circuit 1 recovers to "H" level and the output of playback amplifier 5 is muted by the transistor 6. Whenever the AMS mode is set by one of the switches S1 to Sy, the above operations will be repeated.

When the end of the coated portion is detected in the playback mode, the automatic reversing operation is performed as follows. In the playback mode of the apparatus, the integrating circuit 3 is charged to a certain level et1 by the current signal from the diode D1, but when the leader portion at the end of the tape is detected by the optical device OD, the switching transistors Q1 and Q2 turn on, so that the output of the detecting circuit 1 disappears at the time T4 shown in Figure 4(a). Therefore, the DC voltage of the integrating circuit 3 is discharged along the curve $\tau o$ determined by the time constant ($ro \times Co$). If the leader portion is detected continuously in the forward mode for a certain time t1 which is less than time $\tau o$ (40 to 100 ms) but long enough to distinguish a damaged portion of the tape from the leader portion, the comparator CMP begins to operate from the point where the discharging curve $\tau o$ crosses the reference voltage Er. Therefore, an output pulse P2 is supplied to the terminal IN as shown in Figures 4(f), 4(g) and 4(h), and the running direction of the tape reverses.

Thus, in the embodiment described above, the integrating circuit 3 is charged to a certain DC voltage by the incoming current in response to the mode, that is, the AMS mode or the automatic reversing mode, of the apparatus. Therefore, the times $\tau o$ and t1 can be set to different lengths respectively for the purpose of detection in each mode. Although this embodiment includes the logic circuit 2b for detecting the change of the signal only from "H" level to "L" level, it could be modified to detect the change of the signal only from "L" level to "H" level.

## Claim

1. A tape reproducing, or recording and reproducing, apparatus of automatic reversing type comprising:

an optical sensor (OD) for deriving respective different output signals from the magnetic coated portion of a tape and the leader of the tape;

a first detecting circuit (1) connected to said sensor (OD) and generating a first output signal which changes from one state to another state only when the end of the coated portion of the tape is detected by the sensor (OD) in the forward mode of the apparatus;

a second detecting circuit (5, 2a) including a rectifying circuit (2a) receiving a playback signal and detecting a non-recorded area of the tape, said second detecting circuit (5, 2a) generating a second output signal which changes from one state to another state only when a non-recorded area of the tape is detected in the fast-forward or the fast-rewind mode of the apparatus;

an integration circuit (3) which includes a capacitor ($C_o$) and a resistor ($r_o$) and has a predetermined time constant;

a switching circuit (4) responsive to the modes of the apparatus and selectively supplying one of said first and second output signals to said integration circuit (3) such that the capacitor ($C_o$) of said integration circuit (3) is discharged and charged with the same time constant; and means (2b) for controlling the mode of the apparatus in dependence upon the voltage across said integration circuit (3).

## Patentanspruch

1. Bandwiedergabe- oder Aufzeichnungs- und Wiedergabegerät mit automatischer Laufrichtungsumkehr, das umfaßt:

einen optischen Sensor (OD) zum Ableiten betreffender unterschiedlicher Ausgangssignale von dem magnetisch beschichteten Teil eines Bandes und dem Vorspannteil des Bandes,

eine erste Erfassungsschaltung (1), die mit dem Sensor (OD) verbunden ist und ein erstes Ausgangssignal erzeugt, das von einem Zustand zu einem anderen Zustand nur dann wechselt, wenn das Ende des beschichteten Teils des Bandes durch den Sensor (OD) in der Vorwärtslauf-Betriebsart des Geräts erfaßt ist,

eine zweite Erfassungsschaltung (5, 2a), die eine Gleichrichterschaltung (2a) enthält, welche ein Wiedergabesignal aufnimmt und einen nichtbespielten Bereich des Bandes erfaßt, wobei die zweite Erfassungsschaltung (5, 2a) ein zweites Ausgangssignal erzeugt, das von einem Zustand zu einem anderen Zustand nur dann wechselt, wenn ein nichtbespielter Bereich des Bandes in der Vorwärtslauf- oder der Schnellrückspul-Betriebsart des Geräts erfaßt ist,

eine Integrationsschaltung (3), die einen Kondensator ($C_o$) und einen Widerstand ($r_o$) enthält und eine vorbestimmte Zeitkonstante hat,

eine Schalteinrichtung (4), die auf die Betriebsart-Zustände des Geräts anspricht und selektiv eines der ersten und zweiten Ausgangssignale der Integrationsschaltung (3) derart zuführt, daß der Kondensator ($C_o$) der Integrationsschaltung (3) mit derselben Zeitkonstante entladen und geladen wird, und

ein Mittel (2b) zum Steuern der Betriebsart des Geräts in Abhängigkeit von der Spannung über der Integrationsschaltung (3).

## Revendication

1. Dispositif à bande, de reproduction, ou d'enregistrement et de reproduction, de type à inversion automatique comprenant:

un capteur optique (OD) déduisant différents signaux de sortie respectifs à partir de la partie magnétiquement couverte d'une bande et de l'amorce de la bande:

un premier circuit détecteur (1) relié audit capteur (OD) et engendrant un premier signal de sortie qui ne passe d'un état à l'autre que quand la fin de la partie couverte de la bande est détectée par le capteur (OD) dans le mode de fonctionnement avance du dispositif;

un second circuit détecteur (5, 2a), incluant un circuit redresseur (2a) recevant un signal restitué et détectant une zone non enregistrée de la bande, ledit second circuit détecteur (5, 2a), engendrant un second signal de sortie qui ne passe d'un état à l'autre que quand une zone non enregistrée de la bande est détectée dans le mode d'avance rapide ou de rebobinage rapide du dispositif;

un circuit intégrateur (3) incluant un condensateur ($C_O$) et une résistance ($r_O$) et qui a une constante de temps prédéterminée;

un circuit commutateur (4) dépendant des modes de fonctionnement du dispositif et fournissant sélectivement l'un desdits premier et second signaux de sortie audit circuit intégrateur (3) si bien que le condensateur ($C_O$) dudit circuit intégrateur (3) est déchargé et chargé selon la même constante de temps; et des moyens (2b) de commande du mode de fonctionnement du dispositif en fonction de la tension dudit circuit intégrateur (3).

*F I G. 1*

*F I G. 2*

FIG. 3

EP 0 155 153 B1

FIG. 4

3